# EUROPEAN PATENT APPLICATION

(11) **EP 1 149 686 A2**
(43) Date of publication of application: **31.10.2001**
(21) Application number: 01303807.0
(22) Date of filing: 26.04.2001
(51) Int. Cl.: B29C 65/02, G08C 17/02, B29C 65/34

(54) **Improvements in and relating to fusion control systems**

(30) Priority: 26.04.2000 GB 0010000
(71) Applicant: Glynwed Pipe Systems Limited, Coleshill, Birmingham B46 3BP (GB)
(72) Inventor: Wilkinson, Kevin, Durapipe S & LP, Dewsbury WF12 9DB (GB)
(74) Representative: Pawlyn, Anthony Neil

(57) **Abstract**

The invention provides for a method and apparatus advantageous in electrofusion operations in particular. The invention includes a method of forming a pipeline through fusion, the method comprising the acts of arranging a first component and a second component in contact with one another, one or both of the components being heated under the control of a control unit, the control unit being connected to a power supply, the first component and second component being provided in contact with one another with at least one of the first or second component heated, the first and second component being allowed to cool thereby joining the first component to the second component, wherein one or more pieces of information relating to the fusion are conveyed from the control unit to a different location by a wireless transmitter and / or to the control unit from a different location by a wireless transmitter.

The method may be used to report the operation of the electrofusion apparatus to a remote location and / or receive information from a remote location, for instance operating commands and / or audio signals.

## Description

This invention concerns improvements in and relating to fusion control systems, particularly, but not exclusively to providing information on electrofusion and/or butt fusion operations.

In butt fusion, one or both of the ends of two pipe lengths which are to be joined together are heated to soften them. They are then held in firm contact with one another until the material cools and the join forms.

Electrofusion is commonly used to joint lengths of pipe together to produce a pipeline using fittings known as collars and/or to join other fitting types, such as tapping tees, saddles etc, to pipelines.

Most fusion operations are performed in the field, often in remote locations, with the pipeline being formed in a trench which is then filled to bury the formed pipeline. In many cases it is desirable to record a variety of pieces of information about the fusion operation for subsequent consideration and/or quality monitoring. Where such information is recorded it is generally downloaded via a printer and/or through a portable magnetic recording media which is then used to transfer it to a computer. The operation is only occasionally performed, for instance once a day.

The downloading operation requires the relevant personal to track down where the unit is actually operating, physically get there, download the information and take it back to the location where it can be used.

The present invention has amongst its aims to provide improve availability of information about fusion operations. The present invention has amongst its aims to provide improved monitoring of fusion operations. The present invention has amongst its aims the improvement of fusion control unit operations, maintenance and up-grading.

According to a first aspect of the invention we provide a method of forming a pipeline through fusion, the method comprising the acts of arranging a first component and a second component in contact with one another, one or both of the components being heated under the control of a control unit, the control unit being connected to a power supply, the first component and second component being provided in contact with one another with at least one of the first or second component heated, the first and second component being allowed to cool thereby joining the first component to the second component, wherein one or more pieces of information relating to the fusion are conveyed from the control unit to a different location by a wireless transmitter.

The fusion may be a butt fusion. The fusion may be a fusion in which one or both opposing ends of two pipe lengths which are to be joined are heated. The first and/or second component may be heated when apart. The first and/or second component may be heated when in contact. Preferably the first and second component are held together during cooling. The heating may be effected by resistance heating.

The first aspect of the invention may include and of the features, options or possibilities set out elsewhere in this document, including the second aspect of the invention.

According to a second aspect of the invention we provide a method of fusion, preferably electrofusion, the method comprising the acts of arranging a first component and a second component in contact with one another, connecting the first component to a control unit, the control unit being connected to a power supply, passing a current through the first component to heat at least the first component under the control of the control unit, allowing the first component to cool thereby joining the first component to the second component, wherein one or more pieces of information relating to the fusion are conveyed from the control unit to a different location by a wireless transmitter.

The piece of information may be one or more of, the duration of power application to the first component, the voltage applied, the voltage profile applied, the current applied, the current profile applied, the person performing the fusion, the legal entity performing the fusion, the fitting type, the individual identity of the fitting, the fitting manufacturer, the fusion control unit type, the individual identity of the fusion control unit, the fusion control unit manufacturer, the time of the fusion, the date of the fusion. The piece of information may be one or more of the new information types identified in the applicant's co-filed patent application, reference umber P17805, entitled "Improvements in and relating to pipe forming systems".

The information may be conveyed in the form of one or more of the following, microwave, infra-red, ultra-sonic or optical. Microwave transmission is particularly preferred. The wireless transmission may form only part of the overall transmission from the control unit to the different location.

The different location may be one or more monitoring stations. One or more of the stations may be owned or operated by the pipeline owner. One or more of the stations may be owned or operated by the pipeline installer. One or more of the stations may be owned by the manufacturer and/or provider of the fusion system. The different location to which the control unit is connected may be connected to one or more further different locations. One or more of the different locations may monitor the extent of progress and/or rate of progress of a succession of electrofusion operations. One or more different locations may monitor one or more of the process conditions used. One or more of the different locations may compare one or more of the process conditions against one or more predetermined conditions. Deviation of one or more of the process conditions from the predetermined condition may result in further action. The further action may comprise notification of the discrepancy to one or more parties, potentially including the operator. One or more of the different locations may receive information from a plurality of fusion operation locations. A joint monitoring operation may thus be provided by a central location.

The wireless transmitter may be microwave based. The wireless transmitter may be an integral part of the control unit or provided as an integral part of another element of the fusion apparatus. The wireless may be attached to the apparatus during transmission. The wireless may be detached from the apparatus at one or more other times.

Each piece of information may be transmitted as that piece of information is provided to the control unit. The pieces of information may be transmitted after each piece of information has been provided to the control unit. The pieces of information may be transmitted when the fusion operation is started. The pieces of information may be transmitted when the fusion operation is completed, ideally prior to any further fusion operation. Pieces of information from two or more operations may be transmitted in a single transmission. The pieces of information for the operations having occurred within a predefined time period may be transmitted in a single transmission. The predefined time period may be between 0.5 hours and 3 hours.

The method may include comparing the fusion operations which have been reported as performed with cartographic information to give an indication of the approximate location of the operator.

The method may include transmitting an access code to use the fusion to the different location. Incorrect access code use is preferably noted. A number of incorrect access codes may result in a determination that the apparatus has been stolen and./or is being used by an unauthorised operator.

The pieces of information may include one or more visual images. The image or images may be of the pipeline, the fitting, the pipeline and fitting, the situation of the pipeline and/or fitting. One or more images may be provided, for instance a before fusion and after fusion image. Moving and/or still images may be provided.

The first aspect of the invention may further include any of the possibilities, features and options set out elsewhere in this document, including the second aspect of the invention and the different location to control unit possibilities described therein. In particular the method of the first aspect may include sourcing the information at a different location to the location of the control unit and conveying one or more pieces of the information to the control unit by a wireless receiver.

According to a third aspect of the invention we provide a method of providing information to an fusion, preferably electrofusion, control unit, the control unit receiving a current from a power source and applying the current to a first component to heat at least the first component, in use, the first component cooling thereby joining the first component to a second component, the method including sourcing the information at a different location to the location of the control unit and conveying one or more pieces of the information to the control unit by a wireless receiver.

The information from the different location may be audio information, including speech. The speech may be instructions on one of more of the following, the location of the fusion operation to perform next, the conditions to use in the next fusion operation, modifications or remedial action to the previous and/or present fusion operation, the type of fitting to use, modifications to the pipeline (including direction, configuration, size and orientation), modifications to the fittings to use, modifications to the pipes to use.

The information may be a signal to the control unit and/or power source to disable itself. The power source and/or control unit may be unuseable until the disable signal is cancelled or reversed.

The information may be instructions to perform one or more diagnostic tests and/or how to perform one or more diagnostic tests. The information may be instructions to perform one or more calibration actions and/or how to perform one or more calibration actions. The information may be one or more changes, replacements or additions to the control software or other software of the system. The information may upgrade the performance and/or capabilities of the system.

The information may set one or more of the fusion conditions and/or start and/or stop fusion.

The third aspect of the invention may further include any of the possibilities, features and options set out elsewhere in this document, including the first and/or second aspect of the invention and the control unit to different location possibilities described therein. In particular the third aspect of the invention may further include a method wherein one or more pieces of information relating to the electrofusion are conveyed from the control unit to a different location by a wireless transmitter.

According to a fourth aspect of the invention we provide apparatus for performing an fusion, preferably an electrofusion, operation in which a current is applied to a first component to heat at least the first component, the first component upon cooling joining the first component to a second component, the apparatus including a power source, a control unit and electrical conductors for providing current to at least one of the components, preferably the first component, the apparatus also including a wireless telecommunication device.

The wireless telecommunication device may be or include a satellite telephone. The wireless telecommunication device may be or include a cellular telephone. The wireless telecommunication device may include a radio transmitter and/or receiver. The apparatus may include a still camera and/or motion camera. A digital camera is preferred.

According to a fifth aspect of the invention we provide a fusion, preferably an electrofusion, control unit for controlling an fusion operation in which a current is applied to a first component to heat at least the first component, the first component upon cooling joining the first component to a second component, the control unit including an input connection for connecting to a power source and an output connection for connecting to electrical conductors for providing current to the first component, the control unit also including a wireless telecommunication device.

The wireless telecommunication device may be or include a satellite telephone. The wireless telecommunication device may be or include a cellular telephone. The wireless telecommunication device may include a radio transmitter and/or receiver. The apparatus may include a still camera and/or motion camera. A digital camera is preferred.

The first and/or second and/or third and/or fourth and/or fifth aspects of the invention may include any of the following features, options or possibilities.

The first component is preferably a fitting. The fitting may be any of a collar, a saddle, a tee, a tapping tee, a reducer, an elbow or others.

The second component is preferably one or more lengths of pipe.

The first component may particularly be joined to a first and second length of pipe to form a sealed pipeline.

The control unit preferably specifies a constant voltage for the fusion/electrofusion operation throughout. The control unit preferably specifies a constant current for the fusion/electrofusion operation throughout. The control unit preferably specifies the duration of the fusion/electrofusion operation. The control unit may automatically and/or manually specify the conditions. The control unit is preferably provided with a operator operable interface. The fusion/electrofusion process conditions may be displayed to the operator.

The power supply may be a mains electricity supply. The power supply may be a portable supply, for instance a generator.

The apparatus, particularly the control unit, may provide a memory in which the pieces of information can be stored. The pieces of information may be stored in the memory until they are transferred to a different location, but are preferably stored until periodically removed or the memory is replaced. The memory may be in part a magnetic data carrier to which the pieces of information are recorded.

Various embodiments of the invention will now be described, by way of example only.

As one example of the invention's possible use electrofusion will be discussed, the invention is applicable to butt fusion also.

Electrofusion uses resistance heating to partially melt a plastics component, generally referred to as a fitting, which upon cooling forms a seal. A fitting type called a collar is frequently used to join to lengths of pipe together. The collar is in the form of a hollow cylinder into which the ends of the respective lengths of pipe are inserted from opposing directions. A series of pipe lengths and fittings form a pipeline. Other types of fitting are used to achieve other functions: reducers to join different pipe sizes together; tees to connect spur pipes; saddles to join larger pipes; elbows to change the direction of the pipeline and others.

To provide durability it is imperative that the joints/seals are formed to the highest standard. As part of this aim the fusion operation performed on a fitting can be monitored and subsequently form part of a pool of information on the pipeline and particular the electrofusion operations which formed it. The fitting type, voltage applied, current applied and duration of application may be recorded, together with the identity of the organisation that performed the operation and the date of the operation. This record can be kept manually, but can also be stored by the electrofusion control unit for downloading. The information may be downloaded by printing or by transfer to a computer or the like using a portable magnetic carrier.

The present invention provides an electrofusion control unit which receives its power input from a suitable source (mains or portable generator, for instance) and which provides an output via cables to the fitting in use. The cables are releasably fastened to the fitting and hence the resistance heating elements provided in that fitting. The control unit allows the electrofusion operating conditions to be automatically specified (for instance, by reading a barcode on the fitting) or manually specified (for instance, via a user operable interface). As well as a memory facility for recording the operating conditions, the control unit is also provided with a mobile telecommunication device. The telecommunication device can call a central information receiving station and relay to it the operating conditions and any other information desired. The telecommunication device could be based on a satellite and/or cellular system as desired and depending on the remoteness of the location where use might occur. In most cases it will be sufficient to call in and download the information over hour or so, but the system could be set up to provide the information after each operation if desired. Equally, whilst it is desirable for the telecommunications device to be a continuous part of the control unit, it would be possible to attach the telecommunications device as it were needed and retain it elsewhere or put it to other uses there between.

As well as considerably speeding up the access to such information to a central control, the time and cost involved in getting the information is also greatly reduced. The system also offers far greater versatility and possibilities in a range of other situations, including the following:-
i) the company performing the electrofusion operations can centrally monitor a number of different electrofusion teams at a number of different location with great ease; the progress they are making can be continuously monitored;
ii) the company for whom the electrofusion operations are being carried out (for instance, a utility operator) can have access to the information allowing them to monitor the performance of the company providing the electrofusion function for them (for instance, a sub-contractor); such information could be provided directly or through access to the subcontractors monitoring function;
iii) the immediacy of the information means that the desired operating conditions for a given fitting on a given pipeline can be compared with the operating conditions used, with immediate remedial action being possible if a problem occurs; such action could be taken before it is repeated on further fittings and/or before the pipeline is buried;
iv) the reported progress can be compared with cartographic information to indicate where the operating team are and/or easy the task of finding them in potentially remote locations;
v) particularly where the integral telecommunications device is used, the monitoring team can be confident that the reported information is true and unadulterated;
vi) an access control code could be needed to operate the electrofusion welding unit, with a wrong or series of wrong inputs being reported to the central control; security for the unit against unauthorised use could thus be provided.

The telecommunications device can also provide a useful function in allowing information to be supplied to the electrofusion control unit and/or its operators in a variety of ways including:-
vii) voice contact with the operators; this can allow revised instructions to be provide, instructions on where to go next, instructions on what to do next, remedial action if a problem occurs and the like.
viii) the access code concept could be extended, with wrong inputs resulting in a disabling command being set to the control unit to prevent any further operation; the need for an access code could be triggered remotely as needed and/or up dated periodically by remote means;
ix) the telecommunications device could also be used to input software upgrades to the control unit as they become available and/or as that particular unit needs to be able to perform that level of task; this can be achieve without return from the site of use and/or without return from the company using the unit to the manufacturers;
x) remote access also means that periodic diagnostic tests and/or diagnostic tests in response to a problem detected by the monitoring operation can be performed quickly; again they can also be performed without the need form the unit to be returned;
xi) calibration checks could be made in a similar way, remotely and without the need for direct physical access;
xii) the ability to access the control unit remotely could even be extended to remote control of the operating conditions themselves; for instance the physical assembly of the pipe lengths and fitting, together with the connection of the control unit to the terminal could be performed on site, but the voltage and/or current and/or duration of power application could be inputted remotely and/or the operation could be started and/or finished remotely.

As well as the above mentioned possibility for data and audio information to be communicated the possibility exists to include visual images. A camera, for instance of the digital type, could be used to take one or more images of the fitting/pipe construct and/or the situation surrounding the same. Before and after shots could be taken and transmitted. The still images (which should be sufficient, although moving images could be provided) could then be logged together with the other information on the electrofusion operation for latter use or reference.

## Claims

1. A method of forming a pipeline through fusion, the method comprising the acts of arranging a first component and a second component in contact with one another, one or both of the components being heated under the control of a control unit, the control unit being connected to a power supply, the first component and second component being provided in contact with one another with at least one of the first or second component heated, the first and second component being allowed to cool thereby joining the first component to the second component, wherein one or more pieces of information relating to the fusion are conveyed from the control unit to a different location by a wireless transmitter and / or to the control unit from a different location by a wireless transmitter.

2. A method of fusion, preferably electrofusion, the method comprising the acts of arranging a first component and a second component in contact with one another, connecting the first component to a control unit, the control unit being connected to a power supply, passing a current through the first component to heat at least the first component under the control of the control unit, allowing the first component to cool thereby joining the first component to the second component, wherein one or more pieces of information relating to the fusion are conveyed from the control unit to a different location by a wireless transmitter.

3. A method according to claim 1 or claim 2 in which the piece of information is one or more of, the duration of power application to the first component, the voltage applied, the voltage profile applied, the current applied, the current profile applied, the person performing the fusion, the legal entity performing the fusion, the fitting type, the individual identity of the fitting, the fitting manufacturer, the fusion control unit type, the individual identity of the fusion control unit, the fusion control unit manufacturer, the time of the fusion, the date of the fusion.

4. A method according to any preceding claim in which the different location is one or more monitoring stations.

5. A method according to any preceding claim in which one or more of the different locations monitors the extent of progress and/or rate of progress of a succession of electrofusion operations and / or one or more of the process conditions used.

6. A method according to any preceding claim in which one or more of the different locations compares one or more of the process conditions against one or more predetermined conditions.

7. A method according to claim 6 in which deviation of one or more of the process conditions from the predetermined condition results in further action, the further action potentially comprising notification of the discrepancy to one or more parties.

8. A method according to any preceding claim in which one or more of the different locations receives information from a plurality of fusion operation locations.

9. A method according to any preceding claim in which the wireless transmitter is an integral part of the control unit or provided as an integral part of another element of the fusion apparatus.

10. A method according to any preceding claim in which the wireless transmitter is attached to the apparatus during transmission and the wireless transmitter is detached from the apparatus at one or more other times.

11. A method according to any preceding claim in which pieces of information from two or more operations are transmitted in a single transmission.

12. A method according to any preceding claim in which the method includes comparing the fusion operations which have been reported as performed with cartographic information to give an indication of the approximate location of the operator.

13. A method according to any preceding claim in which the method includes transmitting an access code to use the fusion to the different location.

14. A method according to claim 13 in which an incorrect access code use is noted and preferably a number of incorrect access codes results in a determination that the apparatus has been stolen and./or is being used by an unauthorised operator.

15. A method according to any preceding claim in which the pieces of information include one or more visual images.

16. A method of providing information to an fusion, preferably electrofusion, control unit, the control unit receiving a current from a power source and applying the current to a first component to heat at least the first component, in use, the first component cooling thereby joining the first component to a second component, the method including sourcing the information at a different location to the location of the control unit and conveying one or more pieces of the information to the control unit by a wireless receiver.

17. A method according to claim 1 or claim 2 in which the information from the different location is audio information such speech.

18. A method according to claim 17 in which the speech is one or more of instructions on one of more of the following, the location of the fusion operation to perform next, the conditions to use in the next fusion operation, modifications or remedial action to the previous and/or present fusion operation, the type of fitting to use, modifications to the pipeline (including direction, configuration, size and orientation), modifications to the fittings to use, modifications to the pipes to use.

19. A method according to claim 1 or claim 2 or claim 16 in which the information is a signal to the control unit and/or power source to disable itself.

20. A method according to claim 1 or claim 2 or claim 16 in which the information is instructions to perform one or more diagnostic tests and/or how to perform one or more diagnostic tests and / or instructions to perform one or more calibration actions and/or how to perform one or more calibration actions and / or the one or more changes, replacements or additions to the control software or other software of the system.

21. Apparatus for performing an fusion, preferably an electrofusion, operation in which a current is applied to a first component to heat at least the first component, the first component upon cooling joining the first component to a second component, the apparatus including a power source, a control unit and electrical conductors for providing current to at least one of the components, preferably the first component, the apparatus also including a wireless telecommunication device.

22. A fusion, preferably an electrofusion, control unit for controlling a fusion operation in which a current is applied to a first component to heat at least the first component, the first component upon cooling joining the first component to a second component, the control unit including an input connection for connecting to a power source and an output connection for connecting to electrical conductors for providing current to the first component, the control unit also including a wireless telecommunication device.
